# EUROPÄISCHE PATENTANMELDUNG

(11) **EP 4 531 249 A1**
(43) Veröffentlichungstag der Anmeldung: **02.04.2025**
(21) Anmeldenummer: 23200932.4
(22) Anmeldetag: 29.09.2023
(51) Int. Cl.: H02K 11/21, H02K 5/18, B33Y 80/00

(54) **DECKELELEMENT FÜR EIN LAGERSCHILD EINES ELEKTROMOTORS SOWIE ELEKTROMOTOR**

(71) Anmelder: Siemens Aktiengesellschaft, 80333 München (DE)
(72) Erfinder: Angler, Daniel, 97633 Saal an der Saale (DE); Handwerker, Michael, 97653 Bischofsheim (DE); Mai, Mathias, 97653 Bischofsheim (DE); Serna-Calvo, Eva Teresa, 91080 Spardorf (DE)
(74) Vertreter: Siemens Patent Attorneys

(57) **Zusammenfassung**

Die Erfindung betrifft ein Deckelelement (14) für ein Lagerschild (12) eines Elektromotors (10), wobei eine Außenseite (24) des Deckelelements (14) im verbauten Zustand des Deckelelements (14) am Lagerschild (12) einer Umgebung des Lagerschilds (12) zugewandt ist, und wobei eine Innenseite (22) des Deckelelements (14) einer Geberplatine (20) für einen Geber (18) des Elektromotor (10) zugewandt ist, wobei die Innenseite (22) eine geometrische Kühlstruktur (26) zum Kühlen der Geberplatine (20) aufweist. Ferner betrifft die Erfindung einen Elektromotor (10).

## Beschreibung

Die Erfindung betrifft ein Deckelelement für ein Lagerschild eines Elektromotors, wobei eine Außenseite des Deckelelements im verbauten Zustand des Deckelelements an dem Lagerschild einer Umgebung des Elektromotors/Lagerschilds zugewandt ist, und wobei eine Innenseite des Deckelelements einer Geberplatine für einen Geber des Elektromotors zugewandt ist. Ferner betrifft die Erfindung einen Elektromotor mit zumindest einem Gehäuse mit einem Deckelelement.

Bei Elektromotoren, insbesondere bei Permanentmagnet-Elektromotoren, beziehungsweise Servomotoren werden auf einer der so genannten Kundenanbauseite gegenüberliegenden Seite, welche auch als NDE (non-drive ending) bezeichnet werden kann, Platinen mit Sensoriken und Elektroniken für optische Drehgeber montiert. Für verschiedene Motorbaugrößen gibt es hierzu verschiedene Design-Ausführungen. Die Bausteine dieser Platine erzeugen durch entsprechende elektrische Verluste selbst Wärme und können nur bis zu bestimmten Grenztemperaturen betrieben werden, die deutlich unter den zulässigen Wicklungstemperaturen der Motoren liegen. Zusätzlich zur Erwärmung aus der Motorwicklung führen die Verluste in den eigengelagerten Gebern zu einer Temperaturerhöhung auf den Platinen. Die Ausnutzung der Motoren wird somit durch das Erreichen des Temperaturlimits der Platinenkomponenten begrenzt und nicht durch die zulässige thermische Ausnutzung des Isoliersystems der Motorwicklung.

Aus dem Stand der Technik ist hierbei bereits bekannt, um die thermische Belastung der Platinen unterhalb der jeweils zulässigen Temperaturgrenze zu halten, wird beispielsweise eine Isolierscheibe, aus vorzugsweise duroplastischem Kunststoff, zwischen einem Lagerschild des Elektromotors und einem Deckel eingebaut, um den Wärmestrom von der Motorwicklung über das Gehäuse und Lagerschild zu den Geberkomponenten möglichst zu unterbinden. Zusätzlich wird die so genannte DQ-Con-Platine mittels eines Gap-Fillers, was insbesondere einer wärmeleitfähigen Paste entspricht, mit der Innenseite des Deckels aus Aluminium-Druckguss verbunden, um die auf den Platinen und in der Eigenlagerung des Gebers erzeugte Verlustwärme von der Platine zum Deckel zu transportieren und anschließend über die Außenfläche des Deckels an die Umgebung abzugeben. Hierzu muss der Deckel entsprechend kühler sein als die Platine, beziehungsweise thermisch entkoppelt sein, um ein ausreichendes Temperaturgefälle für den erforderlichen Wärmeübergang zu erreichen.

Aufgabe der vorliegenden Erfindung ist es, ein Deckelelement, sowie einen Elektromotor zu schaffen, mittels welchen eine verbesserte Kühlung einer Geberplatine des Elektromotors realisiert werden kann.

Diese Aufgabe wird durch ein Deckelelement sowie durch einen Elektromotor gemäß den unabhängigen Patentansprüchen gelöst. Vorteilhafte Ausgestaltungsformen sind in den Unteransprüchen angegeben.

Ein Aspekt der Erfindung betrifft ein Deckelelement für ein Lagerschild eines Elektromotors, wobei eine Außenseite des Deckelelements im verbauten Zustand des Deckelelements am Lagerschild einer Umgebung des Lagerschilds zugewandt ist, und wobei eine Innenseite des Deckelelements einer Geberplatine für einen Geber des Elektromotors zugewandt ist.

Es ist dabei vorgesehen, dass die Innenseite eine geometrische Kühlstruktur zum Kühlen der Geberplatine aufweist.

Insbesondere ist somit das Deckelelement derart ausgeführt, dass an der Innenseite zusätzliche Geometrieelemente ausgebildet sind, die zu einer deutlichen Vergrößerung der wärmeaufnehmenden Oberfläche führen, beispielsweise bis zu einem Faktor von fünf gegenüber der ursprünglichen Innenfläche.

Dadurch kann beispielsweise ein so genannter Gap-Filler für die Wärmeübertragung an das Deckelelement entfallen. Ein verbesserter Wärmestrom und die homogene Wärmeverteilung im Deckelelement können dabei beispielsweise durch unterschiedliche Wandstärken im Deckelelement erreicht werden. Die Erreichung einer möglichst homogenen Wärmeverteilung im Deckel ist dabei wichtig, um die Übergabe der Wärmemenge an die Umgebungsluft zu maximieren.

Somit kann über das Deckelelement eine geometrische Kühlstruktur bereitgestellt werden, welche es ermöglicht, dass eine verbesserte Wärmeabgabe von der Geberplatine an die Umgebung realisiert werden kann. Dies führt zu einer verbesserten Kühlung des Elektromotors und somit ist eine Leistungssteigerung des Elektromotors ermöglicht.

Insbesondere ist somit eine passive Kühlung über die geometrische Kühlstruktur vorgesehen. Durch die Vergrößerung der Wärmefläche per Fläche des Deckelelements kann somit mehr thermische Energie durch das Deckelelement aufgenommen werden und insbesondere dann an die Umgebung, insbesondere eine Außenumgebung des Lagerschilds beziehungsweise des Elektromotors abgeführt werden.

Der Elektromotor ist dabei bevorzugt als Servomotor ausgebildet.

Gemäß einer vorteilhaften Ausgestaltungsform ist an der Innenseite zumindest eine Erhebung als geometrische Kühlstruktur ausgebildet. Insbesondere dient die Erhebung dazu, die entsprechende Oberfläche zu vergrößern. Dabei kann die Erhebung unterschiedliche geometrische Strukturen aufweisen. Beispielsweise kann die Erhebung im Wesentlichen zylinderförmig oder auch dreieckförmig sein. Somit kann auf einfache Art und Weise eine geometrische Kühlstruktur mit vergrößere Oberfläche erzeugt werden.

Ferner hat es sich als vorteilhaft erwiesen, wenn an der Innenseite eine Vielzahl an Erhebungen ausgebildet ist. Insbesondere kann die Vielzahl mindestens zwei beziehungsweise mehr Erhebungen aufweisen. Insbesondere können die Erhebungen im Wesentlichen gleichmäßig auf der Innenseite ausgebildet sein. Durch die Vielzahl der Erhebungen kann die Oberfläche des Deckelelements vergrößert werden, wodurch eine verbesserte Wärmeabführung realisiert werden kann.

Eine weitere vorteilhafte Ausgestaltungsform sieht vor, dass die zumindest eine Erhebung im Wesentlichen zylinderförmig ausgebildet ist. Insbesondere ragt somit die Erhebung von der Innenseite in Richtung zur Geberplatine, insbesondere im Wesentlichen in eine Längsrichtung des Elektromotors, wobei die Längsrichtung im Wesentlichen parallel zur einer Drehachse des Elektromotors verläuft, zylinderförmig heraus. Diese Struktur ermöglicht es, eine Vergrößerung der Fläche zu realisieren, wodurch eine verbesserte Wärmeabfuhr von der Geberplatine realisiert werden kann.

Ferner hat es sich als vorteilhaft erwiesen, wenn die geometrische Kühlstruktur als zumindest ein Kühlring ausgebildet ist. Insbesondere läuft somit die Kühlstruktur ringförmig an dem Deckelelement entlang. Hierzu kann es ferner vorgesehen sein, dass beispielsweise in dem Kühlring zumindest bereichsweise die zylinderförmigen Erhebungen zusätzlich mit ausgebildet sind. Dadurch ist es ermöglicht, dass die Oberfläche entsprechend vergrößert werden kann, wodurch eine verbesserte Wärmeabfuhr realisiert werden kann.

Ebenfalls vorteilhaft ist, wenn die geometrische Kühlstruktur eine Vielzahl an Kühlringen aufweist. Somit kann ferner die Oberfläche vergrößert werden und eine verbesserte Wärmeabfuhr realisiert werden.

Eine weitere vorteilhafte Ausgestaltungsform sieht vor, dass die Vielzahl an Kühlringen als ineinanderliegende Kühlringe ausgebildet ist. Insbesondere sind die Kühlringe im Wesentlichen als konzentrische Ringe ausgebildet. Beispielsweise können dann die Kühlringe ineinandergreifend ausgebildet sein, und insbesondere somit unterschiedliche Radien aufweisen. Ein Mittelpunkt der Ringe kann beispielsweise im Wesentlichen mit einer Drehachse des Elektromotors relativ zum angeordneten Deckelelement zusammenfallen. Dadurch ist es ermöglicht, dass auf einfache Art und Weise eine geometrische Kühlstruktur geschaffen ist, welche eine verbesserte Wärmeabfuhr ermöglicht.

Eine weitere vorteilhafte Ausgestaltungsform sieht vor, dass das Deckelelement und die geometrische Kühlstruktur einstückig ausgebildet sind. Beispielsweise kann das Deckelelement aus Aluminium ausgebildet sein. Die geometrische Kühlstruktur kann dann ebenfalls aus Aluminium ausgebildet sein. Somit kann in einem einzigen Herstellungsprozess das Deckelelement mit der geometrischen Kühlstruktur geschaffen werden. Dadurch kann ein einfacher Herstellungsprozess des Deckelements realisiert werden. Ferner kann auf Basis des Aluminiums eine verbesserte Wärmeabfuhr realisiert werden.

Gemäß einer weiteren vorteilhaften Ausgestaltungsform kann zusätzlich auf der geometrischen Kühlstruktur eine wärmeleitende Beschichtung ausgebildet sein. Die wärmeleitende Beschichtung kann insbesondere dazu dienen, zusätzlich zur Vergrößerung der Fläche auch verbessert die Wärme der Geberplatine aufzunehmen. Dadurch kann verbessert die Wärme an die geometrische Kühlstruktur abgebeben werden, wodurch wiederum der Wärmeaustrag aus dem Elektromotor verbessert ist.

Ebenfalls vorteilhaft ist, wenn die wärmeleitende Beschichtung eine Kupferbeschichtung oder eine Lackierung ist. Beispielsweise kann die Lackierung in Form einer Schwarzlackierung ausgebildet sein. Damit ist es ermöglicht, dass auf einfache Art und Weise eine Beschichtung des Deckelelements, insbesondere der geometrischen Kühlstruktur, realisiert werden kann und eine verbesserte Wärmeabfuhr durchgeführt werden kann.

Ferner hat es sich als vorteilhaft erwiesen, wenn die geometrische Kühlstruktur als dreidimensional gedruckte Struktur an der Innenseite ausgebildet ist. Insbesondere kann somit auf der Innenseite die dreidimensional gedruckte Struktur mit möglichst großer Oberfläche ausgeführt sein. Dadurch kann auf der Innenseite viel Strahlungswärme von der Platine zur Innenfläche des Deckelelements übertragen werden.

Eine weitere vorteilhafte Ausgestaltungsform sieht vor, dass die geometrische Kühlstruktur einen Aufnahmebereich für die Geberplatine aufweist. Insbesondere ist die Geberplatine im Wesentlichen halbkreisförmig ausgebildet. In dem Bereich, wo die halbkreisförmige Geberplatine im Wesentlichen in Richtung des Deckelelements angeordnet ist, weist die geometrische Struktur einen entsprechenden Aufnahmebereich auf, welcher dazu dient, die Geberplatine aufzunehmen. Somit kann die geometrische Kühlstruktur sehr nahe an die Geberplatine angeordnet werden, wodurch die geometrische Kühlstruktur die Wärme verbessert aufnehmen kann.

Es hat sich weiter als vorteilhaft erwiesen, wenn im Bereich des Aufnahmebereichs die geometrische Kühlstruktur eine reduzierte Längserstreckung aufweist. Insbesondere kann beispielsweise die Längserstreckung in Richtung der Welle/Achse des Gebers beziehungsweise des Elektromotors betrachtet werden. Die Längserstreckung ist dann im Bereich des Aufnahmebereichs reduziert. Mit anderen Worten weist der Aufnahmebereich eine kürzere Längserstreckung auf als der Nichtaufnahmebereich.

Ein weiterer Aspekt der Erfindung betrifft ein Lagerschild mit einem Deckelelement nach dem vorhergehenden Aspekt.

Ferner betrifft die Erfindung auch einen Elektromotor mit zumindest einem Lagerschild mit einem Deckelelement nach dem vorhergehenden Aspekt, einem Geber sowie einer Geberplatine.

Vorteilhafte Ausgestaltungsformen des Deckelelements sind als vorteilhafte Ausgestaltungsformen des Lagerschilds sowie des Elektromotors anzusehen.

In einer vorteilhaften Ausgestaltungsform des Elektromotors weist die Geberwelle des Gebers eine Verwirbelungsstruktur auf. Insbesondere kann somit auf der Motorwelle beziehungsweise Geberwelle eine Kontur ausgebildet sein, welche zur einer Verwirbelung der Innenluft führt und somit zu einer erzwungenen Konvektion. Dadurch werden die Wärmeübergangsziffern an den Oberflächen deutlich erhöht und es kann eine deutlich größere Wärmemenge von der Platine zur Innenfläche des Deckelelements übertragen werden.

Insbesondere kann der letzte Aspekt der Erfindung auch als unabhängiger Aspekt der Erfindung angesehen werden. Mit anderen Worten kann vorgesehen sein, dass unabhängig von dem Deckelelement mit der geometrischen Kühlstruktur der Elektromotor die Geberwelle/Motorwelle mit der Verwirbelungsstruktur aufweist. Dies dient insbesondere dazu, dass auch ohne geometrische Kühlstruktur eine Verwirbelung innerhalb des Elektromotors erzeugt werden kann, wodurch auf Basis von Konvektion eine verbesserte Wärmeabfuhr realisiert werden kann.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigen:
- FIG 1: eine schematische Teilansicht einer Ausführungsform eines Elektromotors;
- FIG 2: eine weitere schematische Perspektivansicht eines Elektromotors;
- FIG 3: eine schematische Schnittansicht einer weiteren Ausführungsform eines Elektromotors;
- FIG 4: eine schematische Draufsicht auf eine Ausführungsform eines Deckelelements eines Elektromotors;
- FIG 5: eine schematische Perspektivansicht des Deckelelements gemäß FIG 4;
- FIG 6: eine weitere schematische Draufsicht auf eine weitere Ausführungsform eines Deckelelements;
- FIG 7: eine schematische Perspektivansicht gemäß einer Ausführungsform des Deckelelements gemäß FIG 6;
- FIG 8: eine schematische Perspektivansicht einer Verwirbelungsstruktur für einen Elektromotor; und
- FIG 9: eine schematische Schnittansicht einer weiteren Ausführungsform eines Elektromotors.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

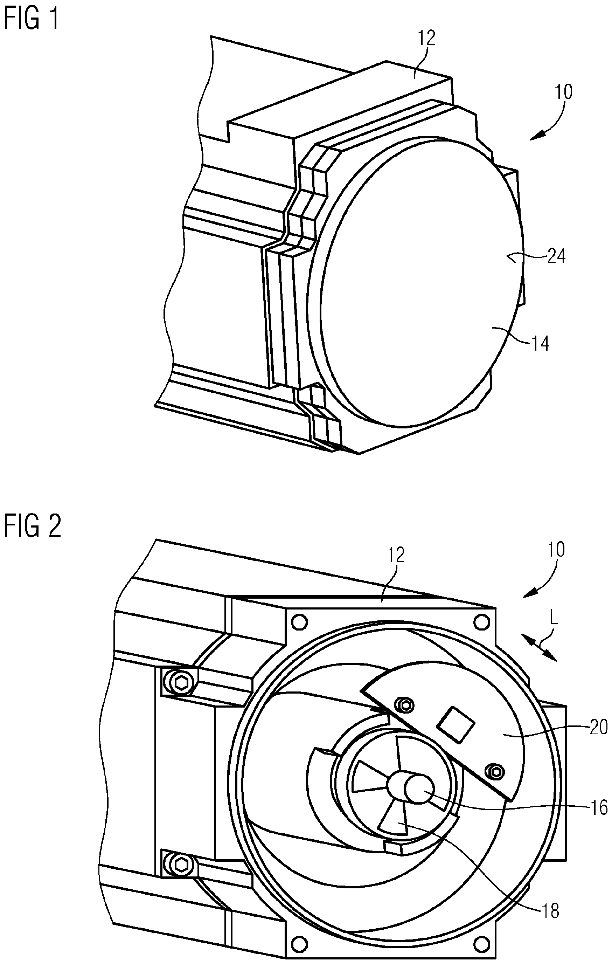

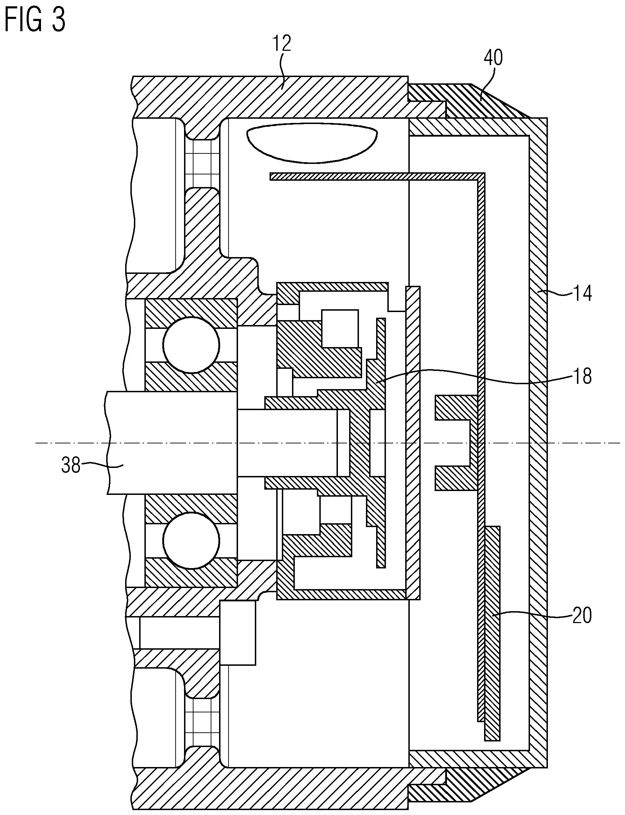

FIG 1 zeigt eine schematische Perspektivansicht einer Ausführungsform eines Elektromotors 10. Der Elektromotor 10 weist ein Lagerschild 12 auf. Das Lagerschild 12 wiederum weist ein Deckelelement 14 auf. In einem Innenraum eines nicht gezeigten Gehäuses und an dem Lagerschild 12 anliegend ist wiederum der Motor selbst, eine Geberwelle 16 oder Motorwelle 38 (Fig. 3), ein Geber 18 (Fig. 2) sowie eine Geberplatine 20 (Fig. 2) ausgebildet. Ferner ist eine Außenseite 24 des Deckelelements 14 gezeigt.

Als Elektromotor 10 kann insbesondere ein spezieller Elektromoto bezeichnet werden, der die Kontrolle einer Winkelposition seiner Motorwelle sowie der Drehgeschwindigkeit und Beschleunigung erlaubt. Insbesondere ist der Elektromotor 12 als Servomotor ausgebildet. Dieser weist dabei insbesondere einen Elektromotor, der zusätzlich mit einem Sensor/Geber 18 zur Positionsbestimmung ausgestattet ist, auf. Die vom Sensor ermittelte Drehposition der Motorwelle 38 wird kontinuierlich an eine meist außerhalb des eigentlichen Motors angebrachte Regelelektronik übermittelt, den so genannten Servoregler, der die Bewegung des Motors entsprechend einem oder mehreren einstellbaren Sollwerten - wie etwa Soll-Winkelposition der Welle oder Solldrehzahl - in einem Regelkreis regelt.

FIG 2 zeigt eine schematische Perspektivansicht des Elektromotors 10 ohne Deckelelement 14 und somit in den Innenraum des Elektromotors 10. Insbesondere ist die Geberwelle 16, der Geber 18 sowie die Geberplatine 20 gezeigt. In der FIG 2 ist insbesondere einen Geberanbau für den Geber 18 mit einen Eigenlagerung und Kupplung gezeigt.

FIG 3 zeigt eine schematische Schnittansicht einer Ausführungsform eines Elektromotors 10. Die FIG 3 zeigt insbesondere einen Geberanbau für einen Geber 18 mit Direktanbau an der Motorwelle 38 des Elektromotors 10. Ferner ist eine Isolierscheibe 40 gezeigt.

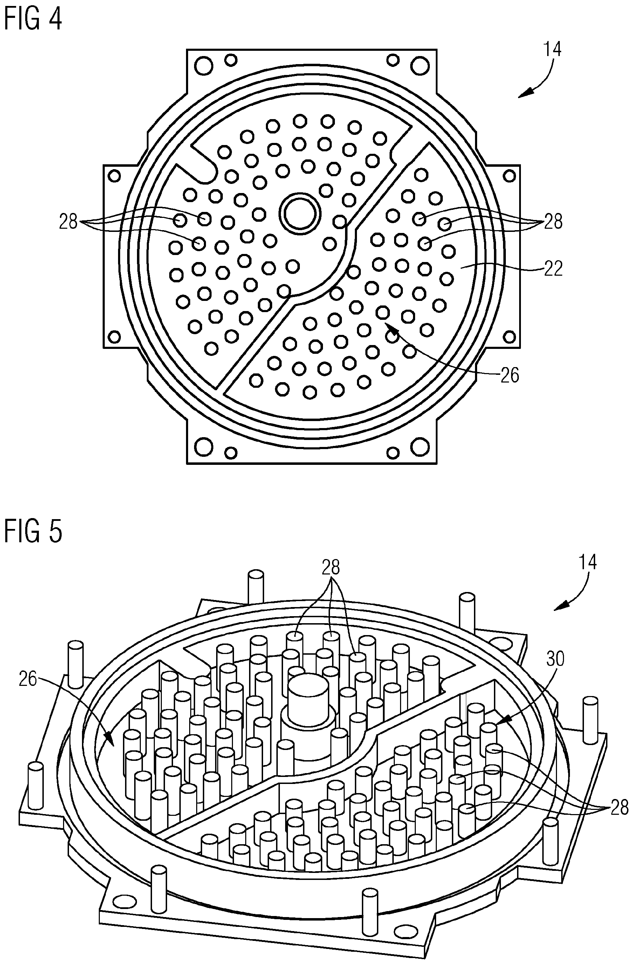

FIG 4 zeigt eine schematische Draufsicht einer Ausführungsform des Deckelelements 14.

Das Deckelelement 14 ist insbesondere für das Lagerschild 12 ausgebildet. Das Deckelelement 14 zeigt im vorliegenden Ausführungsbeispiel eine Innenseite 22. Die Innenseite 22 ist wiederum der Geberplatine 20 im verbauten Zustand zugewandt.

FIG 4 zeigt insbesondere, dass die Innenseite 22 eine geometrische Kühlstruktur 26 zum Kühlen der Geberplatine 20 aufweist. Im folgenden Ausführungsbeispiel ist insbesondere gezeigt, dass zumindest eine Erhebung 28, insbesondere eine Vielzahl von Erhebungen 28, vorgesehen ist. Im vorliegenden Ausführungsbeispiel sind die Erhebungen 28 im Wesentlichen zylinderförmig. Es ist selbstverständlich, dass die Erhebungen 28 auch andere Formen aufweisen können, beispielsweise pyramidenförmig oder dergleichen ausgebildet sein können.

Insbesondere ist es somit gezeigt, dass das Deckelelement 14 derart ausgebildet ist, dass es an der Innenseite 22 die zusätzliche geometrische Kühlstruktur 26 aufweist, die zu einer deutlichen Vergrößerung der wärmeaufnehmenden Oberfläche führt. Dadurch kann beispielsweise ein so genannter Gap-Filler für die Wärmeübertragung an das Deckelelement 14 entfallen. Ein verbesserter Wärmestrom und die homogene Wärmeverteilung im Deckelelement 14 werden durch unterschiedliche Wandstärken im Deckelelement 14 erreicht. Die Erreichung einer möglichst homogenen Wärmeverteilung im Deckelelement 14 ist wichtig, um die Übergabe der Wärmemenge an die Umgebungsluft, insbesondere an der Außenseite 24, zu maximieren.

FIG 5 zeigt eine schematische Perspektivansicht gemäße einer Ausführungsform des Deckelelements 14 aus FIG 4. Insbesondere sind vorliegend die Erhebungen 28 perspektivisch dargestellt.

Es kann in einem weiteren Ausführungsbeispiel vorgesehen sein, dass auf der geometrischen Kühlstruktur 26 eine wärmeleitende Beschichtung 30 vorgesehen sein kann. Die wärmeleitende Beschichtung 30 kann eine beispielsweise eine Kupferbeschichtung oder eine Lackierung, insbesondere eine Schwarzlackierung, sein. Insbesondere kann somit vorgesehen sein, dass die geometrische Kühlstruktur 26 vorgesehen ist und zusätzlich auf der Innenseite 22 eine sehr gut leitende Kupferbeschichtung oder eine schwarze Lackierung mit einem sehr hohen Absorptionsgrad ausgeführt ist, um die Wärmeaufnahme noch weiter zu optimieren.

Ferner kann insbesondere vorgesehen sein, dass die geometrische Kühlstruktur 26 und das Deckelelement 14 einstückig, beispielsweise einstückig aus Aluminium, ausgebildet sind.

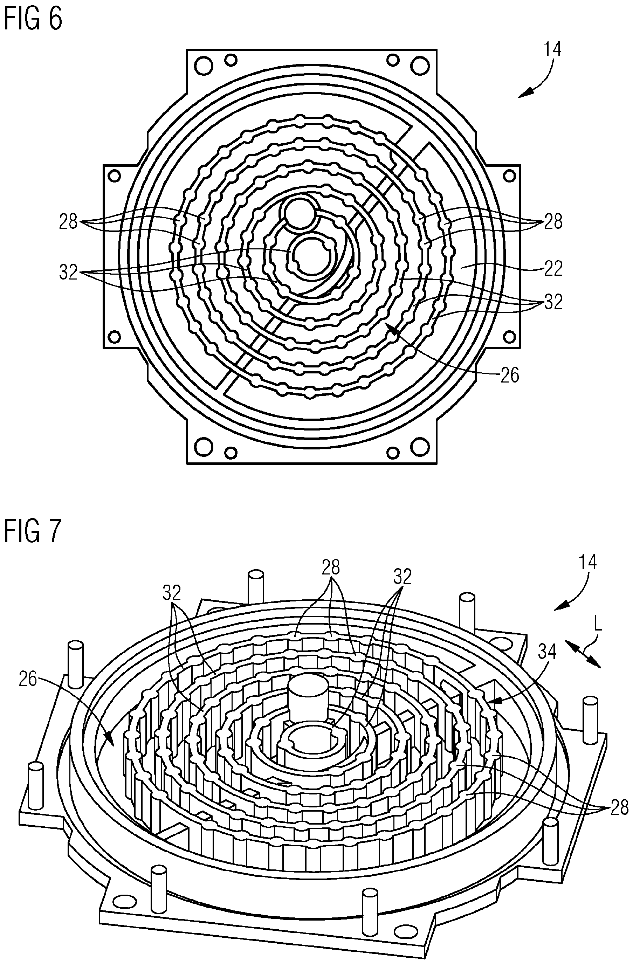

FIG 6 zeigt eine weitere schematische Draufsicht auf eine Ausführungsform des Deckelelements 14. Vorliegend ist insbesondere gezeigt, dass die geometrische Kühlstruktur 26 zumindest einen Kühlring 32 aufweisen kann. Insbesondere kann vorgesehen sein, dass eine Vielzahl von Kühlringen 32 vorgesehen ist, wobei insbesondere die Kühlringe als ineinanderliegend ausgebildet sein können. Des Weiteren zeigt FIG 6, dass an den Kühlringen 32 ebenfalls die Erhebungen 28, vorliegend insbesondere die zylinderförmigen Erhebungen 28, ausgebildet sein können.

Die Kühlringe 32 sowie im vorliegenden Ausführungsbeispiel auch die Erhebungen 28 können dabei als dreidimensional gedruckte Struktur an der Innenseite 22 ausgebildet sein. Dadurch kann auf der Innenseite 22 viel Strahlungswärme von der Platine 20 zur Innenfläche des Deckelelements 14 übertragen werden.

FIG 7 zeigt eine schematische Perspektivansicht des Deckelelements 14 gemäß FIG 6.

Im folgenden Ausführungsbeispiel ist insbesondere gezeigt, dass die geometrische Kühlstruktur 26 einen Aufnahmebereich 34 für die Geberplatine 20 aufweist. Insbesondere ist der Aufnahmebereich 34 als Bereich mit reduzierter Längserstreckung L ausgebildet.

Mit anderen Worten ist zu sehen, dass in einem dem Betrachter zugewandten Bereich der Aufnahmebereich 34 ausgebildet ist, welcher eine reduziertere Längserstreckung L hat als der dahinterliegende Bereich. Insbesondere kann in diesem Aufnahmebereich 34, dann im zusammengebauten Zustand des Elektromotors 10, die Geberplatine 20 angeordnet werden.

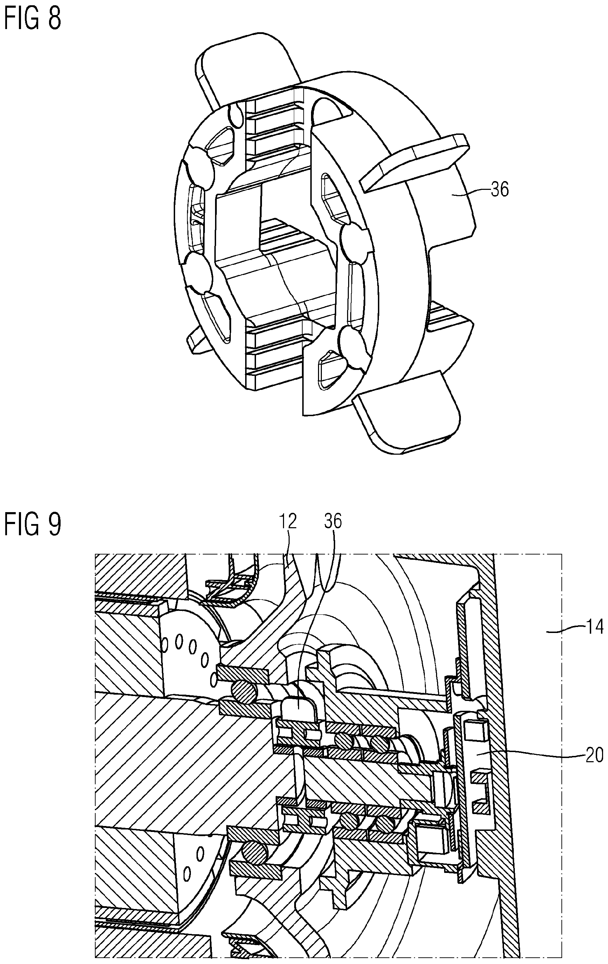

FIG 8 zeigt eine schematische Perspektivansicht einer Verwirbelungsstruktur 36. Die Verwirbelungsstruktur 36 dient insbesondere zur zusätzlichen Kühlung. FIG 9 zeigt wiederum die Verwirbelungsstruktur 36 in einem verbauten Zustand in dem Elektromotor 10.

Eine weitere Ergänzung kann somit vorgesehen sein, dass auf der rotierenden Motor- beziehungsweise Geberwelle eine entsprechende Kontur als Verwirbelungsstruktur 36 angebracht ist, welche zu einer Verwirbelung der Innenluft führt und somit zu einer erzwungenen Konvektion. Dadurch werden die Wärmeübergangsziffern an den Oberflächen deutlich erhöht und es kann eine deutlich größere Wärmemenge von der Geberplatine 20 zur Innenfläche des Deckelelements 14 übertragen werden. Insbesondere kann dieser Aspekt sowohl in Zusammenschau mit der geometrischen Kühlstruktur 26 sowie auch unabhängig von der geometrischen Kühlstruktur 26 betrachtet werden.

Insbesondere ist somit das Deckelelement 14 derart ausgeführt, dass an der Innenseite zusätzliche Geometrieelemente ausgebildet sind, die zu einer deutlichen Vergrößerung der wärmeaufnehmenden Oberfläche führen, beispielsweise bis zu einem Faktor von fünf gegenüber der ursprünglichen Innenfläche. Dadurch kann beispielsweise ein so genannter Gap-Filler für die Wärmeübertragung an das Deckelelement entfallen. Ein verbesserter Wärmestrom und die homogene Wärmeverteilung im Deckelelement können dabei beispielsweise durch unterschiedliche Wandstärken im Deckelelement erreicht werden. Die Erreichung einer möglichst homogenen Wärmeverteilung im Deckel ist dabei wichtig, um die Übergabe der Wärmemenge an die Umgebungsluft zu maximieren.

Insbesondere zeigen die Fig. 1 bis 9 somit, dass über das Deckelelement 14 die geometrische Kühlstruktur 26 bereitgestellt werden kann, welche es ermöglicht, dass eine verbesserte Wärmeabgabe von der Geberplatine 20 an die Umgebung realisiert werden kann. Dies führt zu einer verbesserten Kühlung des Elektromotors 10 und somit zu einer Leistungssteigerung des Elektromotors 10.

Insbesondere ist somit eine passive Kühlung über die geometrische Kühlstruktur 26 vorgesehen. Durch die Vergrößerung der Wärmefläche per Fläche des Deckelelements 14 kann somit mehr thermische Energie durch das Deckelelement 14 aufgenommen werden und insbesondere dann an die Umgebung, insbesondere eine Außenumgebung des Gehäuses 12 beziehungsweise des Elektromotors 10 abgeführt werden.

## Patentansprüche

1. Deckelelement (14) für ein Lagerschild (12) eines Elektromotors (10), wobei eine Außenseite (24) des Deckelelements (14) im verbauten Zustand des Deckelelements (14) am Lagerschild (12) einer Umgebung des Lagerschilds (12) zugewandt ist, und wobei eine Innenseite (22) des Deckelelements (14) einer Geberplatine (20) für einen Geber (18) des Elektromotors (10) zugewandt ist,
**dadurch gekennzeichnet, dass**
die Innenseite (22) eine geometrische Kühlstruktur (26) zum Kühlen der Geberplatine (20) aufweist.

2. Deckelelement (14) nach Anspruch 1, **dadurch gekennzeichnet, dass**
an der Innenseite (22) zumindest eine Erhebung (28) als geometrische Kühlstruktur (26) ausgebildet ist.

3. Deckelelement (14) nach Anspruch 2, **dadurch gekennzeichnet, dass**
an der Innenseite (22) eine Vielzahl an Erhebungen (28) ausgebildet ist.

4. Deckelelement (14) nach einem der Ansprüche 2 oder 3, **dadurch gekennzeichnet, dass**
die zumindest eine Erhebung (28) im Wesentlichen zylinderförmig ist.

5. Deckelelement (14) nach einem der vorhergehenden Ansprüche, **dadurch gekennzeichnet, dass**
die geometrische Kühlstruktur (26) als zumindest ein Kühlring (32) ausgebildet ist.

6. Deckelelement (14) nach Anspruch 5, **dadurch gekennzeichnet, dass**
die geometrische Kühlstruktur (26) eine Vielzahl an Kühlringen (32) aufweist.

7. Deckelelement (14) nach Anspruch 6, **dadurch gekennzeichnet, dass**
die Vielzahl an Kühlringen (32) als ineinanderliegende Kühlringe (32) ausgebildet sind.

8. Deckelelement (14) nach einem der vorhergehenden Ansprüche, **dadurch gekennzeichnet, dass**
das Deckelelement (14) und die geometrische Kühlstruktur (26) einstückig ausgebildet sind.

9. Deckelelement (14) nach einem der vorhergehenden Ansprüche, **dadurch gekennzeichnet, dass**
zusätzlich auf der geometrischen Kühlstruktur (26) eine wärmeleitende Beschichtung (30) ausgebildet ist.

10. Deckelelement (14) nach Anspruch 9, **dadurch gekennzeichnet, dass**
die wärmeleitende Beschichtung (30) eine Kupferbeschichtung oder eine Lackierung ist.

11. Deckelelement (14) nach einem der vorhergehenden Ansprüche, **dadurch gekennzeichnet, dass**
die geometrische Kühlstruktur (32) als dreidimensional gedruckte Struktur an der Innenseite (22) ausgebildet ist.

12. Deckelelement (14) nach einem der vorhergehenden Ansprüche, **dadurch gekennzeichnet, dass**
die geometrische Kühlstruktur (26) einen Aufnahmebereich (34) für die Geberplatine (20) aufweist.

13. Deckelelement (14) nach Anspruch 12, **dadurch gekennzeichnet, dass**
im Bereich des Aufnahmebereichs (34) die geometrische Kühlstruktur (26) eine reduzierte Längserstreckung (L) aufweist.

14. Elektromotor (10) mit zumindest einem Lagerschild (12) mit einem Deckelelement (14) nach einem der Ansprüche 1 bis 13, einem Geber (16) und einer Geberplatine (20).

15. Elektromotor (10) nach Anspruch 14, **dadurch gekennzeichnet, dass**
auf einer Geberwelle (18) des Gebers (16) eine Verwirbelungsstruktur (36) ausgebildet ist.
